# FASCICULE DE BREVET EUROPEEN

(11) **EP 3 775 516 B1**
(45) Date de publication et mention de la délivrance du brevet: **06.11.2024**
(21) Numéro de dépôt: 19720951.3
(22) Date de dépôt: 28.03.2019
(51) Int. Cl.: F01P 5/02, F01P 5/06, F01P 7/10, F04D 17/04

(54) **DISPOSITIF DE VENTILATION POUR VEHICULE AUTOMOBILE**
VENTILATIONSVORRICHTUNG FÜR EIN KRAFTFAHRZEUG
VENTILATION DEVICE FOR A MOTOR VEHICLE

(30) Priorité: 28.03.2018 FR 1852695
(43) Date de publication de la demande: 17.02.2021
(73) Titulaire: Valeo Systemes Thermiques, 78322 Le Mesnil Saint Denis Cedex (FR)
(72) Inventeur: AZZOUZ, Kamel, 78322 LE MESNIL SAINT DENIS CEDEX (FR); MAMMERI, Amrid, 78322 LE MESNIL SAINT DENIS CEDEX (FR); LISSNER, Michael, 78322 LE MESNIL SAINT DENIS CEDEX (FR); GARNIER, Sébastien, 78322 LE MESNIL SAINT DENIS CEDEX (FR)
(74) Mandataire: Valeo Systèmes Thermiques
(86) Numéro de dépôt international: PCT/FR2019/050728
(87) Numéro de publication internationale: WO 2019/186076

(56) Documents cités:
- EP-A1- 0 233 174
- DE-A1- 102008 020 310
- DE-A1- 4 023 260
- GB-A- 885 223
- US-A- 4 032 254

## Description

L'invention a pour objet un dispositif de ventilation pour véhicule automobile.

L'invention se rapporte au domaine de l'automobile, et plus particulièrement au domaine de la circulation d'air pour le refroidissement du moteur et de ses équipements.

Les véhicules à moteur, qu'ils soient à combustion ou électriques, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

De façon connue, un tel dispositif de ventilation comprend un ventilateur à hélice. Un tel dispositif de ventilation est décrit dans le document DE 10 2008 020310A1.

Le flux d'air généré par les pales d'un tel ventilateur est turbulent, notamment en raison de la géométrie circulaire de l'hélice, et n'atteint en général qu'une partie seulement de la surface de l'échangeur de chaleur (zone circulaire de l'échangeur faisant face à l'hélice du ventilateur). L'échange de chaleur ne se fait donc pas de façon homogène sur toute la surface des tubes et des ailettes.

En outre, lorsque la mise en marche du ventilateur ne s'avère pas nécessaire (typiquement lorsque l'échange de chaleur avec de l'air ambiant non accéléré suffit à refroidir le fluide caloporteur circulant dans l'échangeur), les pales obstruent en partie l'écoulement de l'air ambiant vers les tubes et les ailettes, ce qui gêne la circulation d'air vers l'échangeur et limite ainsi l'échange de chaleur avec le fluide caloporteur.

Un tel ventilateur est en outre relativement encombrant, à cause notamment des dimensions nécessaires de l'hélice pour obtenir un refroidissement moteur effectif, ce qui rend long et délicat son intégration dans un véhicule automobile.

Cette intégration est d'autant plus compliquée dans un véhicule électrique, dont la face avant laisse peu de place pour y loger les éléments de refroidissement du véhicule.

Le but de l'invention est de remédier au moins partiellement à ces inconvénients.

A cet effet, l'invention a pour objet un dispositif de ventilation destiné à générer un flux d'air en direction d'un échangeur de chaleur de véhicule automobile, comprenant au moins :
- un ventilateur tangentiel de mise en mouvement d'un flux d'air à destination de l'échangeur de chaleur, et
- un moyen de guidage comprenant au moins un élément de guidage de l'air conformé pour guider l'air mis en mouvement par le ventilateur tangentiel vers l'échangeur de chaleur.

Ainsi, le dispositif de ventilation selon la présente invention étant dépourvu d'hélice, il présente un encombrement réduit, ce qui assure une intégration simple dans tout véhicule automobile, y compris électrique.

De surcroît, grâce au ventilateur tangentiel et au moyen de guidage, le dispositif de ventilation selon la présente invention garantit un refroidissement plus homogène et efficace de l'échangeur de chaleur ou des échangeurs de chaleur auxquels il est associé.

Le ventilateur tangentiel peut aussi être nommé turbomachine tangentielle.

Selon une autre caractéristique de l'invention, le dispositif comprend au moins un déflecteur d'air configuré pour être disposé entre ledit au moins un élément de guidage et l'échangeur de chaleur.

Selon une autre caractéristique de l'invention, le dispositif comprend une pluralité de déflecteurs d'air alignés et de préférence équidistants les uns des autres.

Selon une autre caractéristique de l'invention, le dispositif comprend une pluralité d'éléments de guidage d'air.

Selon une autre caractéristique de l'invention, les éléments de guidage d'air sont conformés pour délimiter au moins un passage d'air dans l'échangeur de chaleur et sont montés mobiles entre une position d'ouverture dudit passage d'air et une position d'obturation au moins partielle dudit passage d'air.

Le dispositif peut permettre ainsi de ne pas bloquer l'écoulement de l'air ambiant vers l'échangeur de chaleur lorsque le dispositif de ventilation est éteint, contrairement à une hélice dont les pales immobiles et le moteur au centre de l'hélice obstruent le passage de l'air vers l'échangeur, et ainsi limitent l'échange de chaleur.

Selon une autre caractéristique de l'invention, chaque élément de guidage d'air comprend une surface de guidage d'air et un axe de pivotement de l'élément de guidage.

Selon une autre caractéristique de l'invention, les axes de pivotement s'étendent parallèlement les uns aux autres, des projections de chaque axe de pivotement dans un plan orthogonal aux axes de pivotement étant appelées projection.

Selon une autre caractéristique de l'invention, les projections sont alignées dans ledit plan orthogonal aux axes de pivotement.

Selon une autre caractéristique de l'invention, le dispositif comprend au moins un premier et un deuxième ventilateurs tangentiels de part et d'autre des éléments de guidage, les ventilateurs tangentiels s'étendant parallèlement aux éléments de guidage, une section totale des éléments de guidage présentant une direction médiane parallèle aux éléments de guidage de sorte à délimiter une première moitié de section entre le premier ventilateur et la direction médiane et une deuxième moitié de section entre le deuxième ventilateur et la direction médiane, les éléments de guidage étant conformés pour qu'une distance entre l'échangeur de chaleur et une projection soit inférieure à une distance entre l'échangeur de chaleur et la projection adjacente, située dans la même moitié de section et étant plus proche de la turbomachine associée.

Selon une autre caractéristique de l'invention, le dispositif comprend un unique élément de guidage fixe.

Selon une autre caractéristique de l'invention, le dispositif comprend une entrée d'air associée à chaque turbomachine, la ou les entrées formant des entrées d'air uniques du dispositif de ventilation.

Selon une autre caractéristique de l'invention, l'une au moins desdites entrées d'air est munie d'au moins un volet mobile entre une position d'ouverture de l'entrée et une position de fermeture au moins partielle de l'entrée.

Selon une autre caractéristique de l'invention, l'au moins un ventilateur tangentiel est conformé pour s'étendre le long d'une ouverture d'une calandre du véhicule automobile.

Selon une autre caractéristique de l'invention, l'au moins un ventilateur tangentiel est conformé pour occuper tout le volume de l'ouverture de la calandre.

Selon une autre caractéristique de l'invention, une pièce pour amener un flux d'air extérieur jusqu'à la turbomachine peut être utilisée.

Selon une autre caractéristique de l'invention, un deuxième moyen de guidage comportant au moins un élément de guidage d'air vers un deuxième échangeur de chaleur du véhicule automobile peut être utilisé.

Selon une autre caractéristique de l'invention, les deux moyens de guidage sont alimentés par le même ventilateur tangentiel.

Selon une autre caractéristique de l'invention, chacun des moyens de guidage comprend une pluralité d'éléments de guidage d'air, chaque élément de guidage comprenant une surface de guidage d'air et un axe de pivotement de l'élément de guidage, les axes de pivotement s'étendant parallèlement les uns aux autres, l'ensemble des deux moyens de guidage présentant une symétrie planaire.

L'invention a également pour objet un module d'échange thermique, comprenant un dispositif de ventilation tel que décrit précédemment et au moins un premier échangeur de chaleur, le premier échangeur de chaleur et le dispositif de ventilation étant positionnés l'un relativement à l'autre de sorte qu'un flux d'air mis en mouvement par le dispositif de ventilation alimente en air l'échangeur de chaleur.

Selon une autre caractéristique de l'invention, le module comprend en outre un deuxième échangeur de chaleur, monté en vis-à-vis du premier échangeur de chaleur, le dispositif de ventilation étant positionné de sorte qu'un flux d'air mis en mouvement par le dispositif de ventilation alimente le premier échangeur de chaleur et le deuxième échangeur de chaleur.

Selon une autre caractéristique de l'invention, le dispositif de ventilation est positionné entre le premier échangeur de chaleur et le deuxième échangeur de chaleur.

L'invention a également pour objet une calandre pour un véhicule automobile, munie d'une ouverture et d'un dispositif de ventilation tel que décrit précédemment et/ou un module d'échange thermique tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un module d'échange de chaleur équipé d'un dispositif de ventilation selon un premier mode de réalisation de la présente invention en position ouverte ;
- la figure 2 illustre une vue en perspective du module d'échange de chaleur de la figure 1 en position fermée ;
- la figure 3 illustre une vue en coupe longitudinale du module de la figure 1 ;
- la figure 4 illustre une vue en coupe longitudinale du module de la figure 2 ;
- la figure 5 illustre une vue en perspective d'une face avant de véhicule automobile équipé du module de la figure 1 ;
- la figure 6 illustre une vue en perspective d'une face avant de véhicule automobile équipé du module de la figure 2 ;
- la figure 7 illustre une vue de côté de la face avant de la figure 5 ;
- la figure 8 illustre une vue de dessus de la face avant de la figure 6 ;
- la figure 9 illustre une vue en perspective partielle du module de la figure 1 selon une variante de réalisation, un moyen de guidage n'étant pas représenté ;
- la figure 10 illustre une vue en coupe longitudinale du module de la figure 9 ;
- la figure 11 illustre une vue en perspective partielle d'un module d'échange de chaleur équipé d'un dispositif de ventilation selon un deuxième mode de réalisation de la présente invention en position ouverte ;
- la figure 12 illustre une vue en perspective partielle du module de la figure 11 en position fermée ;
- la figure 13 illustre une vue en perspective d'une face avant de véhicule automobile muni d'un module d'échange équipé d'un dispositif de ventilation selon un troisième mode de réalisation de la présente invention ; et
- la figure 14 illustre une vue de côté de la face avant de la figure 13.

### Dispositif de ventilation

L'invention a pour objet un dispositif de ventilation 1 pour véhicule automobile.

L'invention a également pour objet un module d'échange thermique 100, comprenant au moins un dispositif de ventilation 1 et au moins un échangeur thermique 101, comme il sera détaillé ultérieurement.

Comme il ressort des figures, le dispositif de ventilation 1 comprend au moins un ventilateur tangentiel, aussi nommé turbomachine tangentielle ci-après, référencée 2, pour mettre en mouvement un flux d'air F à destination de l'échangeur de chaleur ou des échangeurs de chaleur. En effet, le dispositif de ventilation peut alimenter en air l'échangeur de chaleur 101 mais aussi plusieurs échangeurs de chaleur disposés l'un derrière l'autre, ou l'un à côté de l'autre.

Le dispositif de ventilation 1 comprend également un moyen de guidage 3 de l'air F jusque dans chacun des échangeurs de chaleur à refroidir.

### Premier mode de réalisation

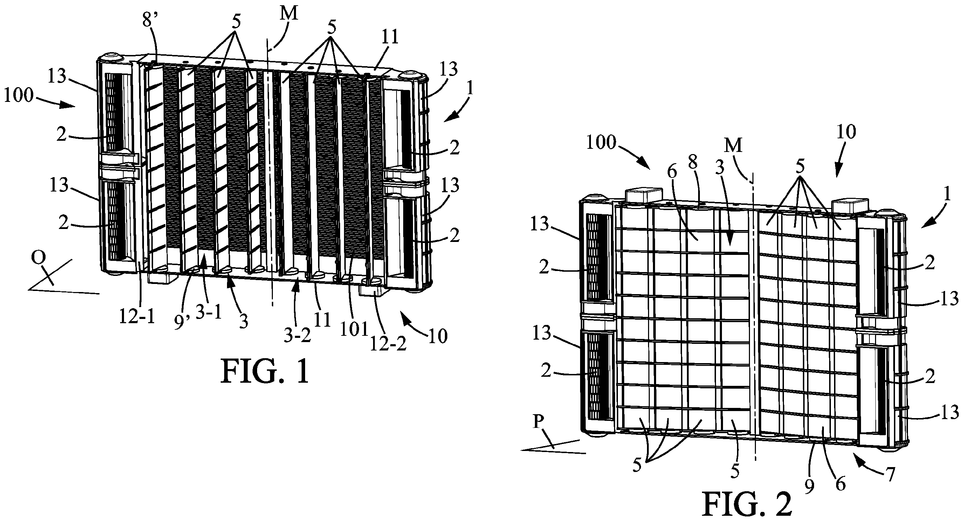

Selon le premier mode de réalisation, illustré sur les figures 1 à 8, le dispositif de ventilation 1 comprend un unique moyen de guidage 3 pour guider l'air vers au moins un échangeur de chaleur 101.

Le moyen de guidage 3 comprend un ensemble d'une pluralité d'éléments de guidage 5.

Comme il ressort particulièrement des figures 1 à 4, chaque élément de guidage 5 comprend une surface de guidage d'air 6 de la forme d'un panneau et un axe de pivotement 7 de l'élément de guidage 5.

Le panneau 6 présente une forme sensiblement rectangulaire.

L'axe de pivotement 7 comprend deux doigts 8, 9, alignés, chacun des doigts 8, 9 faisant saillie hors du panneau 6 dans une direction longitudinale du panneau 6.

Les éléments de guidage 5 sont montés parallèlement les uns aux autres, et parallèlement à une direction médiane dite de pivotement, notée M.

Comme il ressort également des figures 1 et 2, le dispositif de ventilation 1 comprend un cadre 10.

Le cadre 10 présente une forme sensiblement rectangulaire.

Le cadre 10 comprend deux barres 11 de support respectivement des doigts 8 et des doigts 9 des éléments de guidage 5.

Les barres 11 s'étendent parallèlement l'une à l'autre et orthogonalement à la direction M.

Les barres 11 forment longueurs du rectangle 10.

Le cadre 10 comprend également deux barres 12-1, 12-2 de soutien de compartiments 13.

Les barres 12-1, 12-2 s'étendent parallèlement l'une à l'autre, et parallèlement à la direction M.

Les barres 12-1, 12-2 forment largeurs du rectangle 10.

Comme visible sur les figures 1 et 2, chaque barre 12-1, 12-2 supporte deux compartiments 13 s'étendant dans le prolongement l'un de l'autre.

Chaque compartiment 13 est configuré pour loger une turbomachine tangentielle 2, ou tout au moins la turbine tangentielle de la turbomachine, le moteur d'entrainement de la turbine pouvant être commun avec une turbine d'un compartiment adjacent.

On peut définir deux parties du moyen de guidage 3.

Une première partie 3-1 comprend les éléments de guidage 5 disposés entre la première barre 12-1 et la direction médiane de pivotement M et une deuxième partie 3-2 comprend les éléments de guidage 5 disposés entre la deuxième barre 12-2 et la direction médiane de pivotement M.

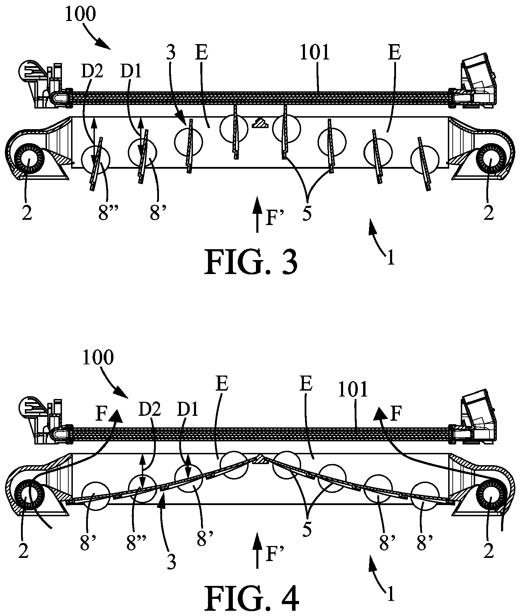

Comme plus particulièrement visible sur les figures 3 et 4, les doigts 8 (respectivement 9) ne sont pas alignés.

Leurs projections 8' (respectivement 9') dans un plan, noté O, orthogonal à l'axe M, forment un V.

Le plan O coïncide sensiblement avec le plan formé par la barre de support 11.

En d'autres termes, les éléments de guidage sont positionnés entre les barres de support 11 pour qu'une distance D1 entre l'échangeur de chaleur 101 et une projection donnée 8' (9') soit inférieure à une distance D2 entre l'échangeur de chaleur 101 et la projection adjacente 8", située dans la même moitié de section 3-1 en étant plus proche de la turbomachine tangentielle associée.

Cette configuration assure un guidage optimal de l'air puisque le flux d'air converge depuis la turbomachine tangentielle 2 jusque dans l'échangeur de chaleur 101.

Néanmoins, selon une autre variante, les projections peuvent être alignées le long des barres 11.

Cette variante, moins avantageuse pour l'écoulement d'air, permet éventuellement de simplifier le procédé de fabrication du dispositif de ventilation 1.

Le cadre 10 délimite un espace interne formant l'entrée d'air à destination de l'échangeur de chaleur 101. Au sein de cet espace interne, les éléments de guidage délimitent des passages d'air E vers l'échangeur de chaleur 101.

Les éléments de guidage sont montés mobiles entre une position d'ouverture du passage d'air E et une position d'obturation au moins partielle du passage d'air E.

En position d'ouverture, les panneaux sont espacés les uns des autres de sorte à laisser passer un flux d'air F' extérieur au module d'échange vers l'échangeur de chaleur 101.

En position d'obturation, autrement appelée position de fermeture, les panneaux 6 s'étendent dans le prolongement les uns des autres de sorte à empêcher au flux d'air F' de traverser l'échangeur de chaleur 101.

Dans cette position, les panneaux 6 sont avantageusement jointifs les uns des autres grâce à une lèvre disposée le long de leur bord.

Selon une autre position intermédiaire possible (non représentée sur les figures), les éléments de guidage obturent partiellement le passage d'air E, ce qui permet de réduire le débit d'air vers l'échangeur de chaleur 101, par exemple lorsque les besoins de refroidissement de l'échangeur de chaleur 101 ne sont pas élevés.

Comme visible sur la figure 3, en position d'ouverture, le flux F', extérieur au véhicule traverse le dispositif de ventilation 1 jusque dans l'échangeur de chaleur 101.

Les turbomachines 2 sont préférentiellement à l'arrêt.

Comme visible sur la figure 4, en position de fermeture les panneaux 6 bloquent le passage d'air E au flux d'air F'.

Les turbomachines fonctionnent alors et soufflent le flux d'air F qui est alors guidé par les éléments de guidage 5 jusque dans l'échangeur de chaleur 101.

Du fait de la forme convergente du moyen de guidage 3, l'air est acheminé de manière optimale à l'échangeur de chaleur 101.

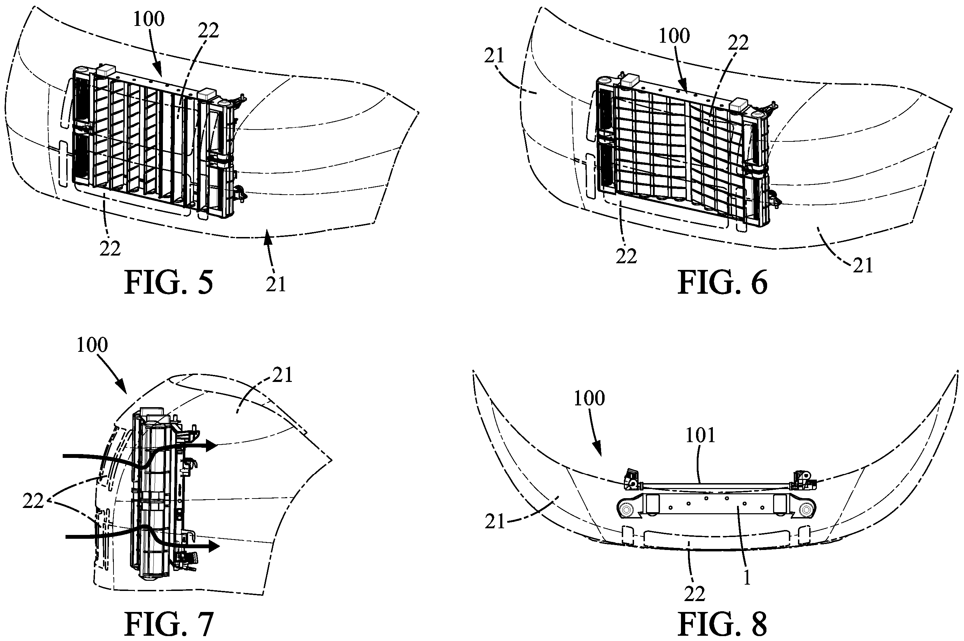

Les figures 5 à 8 illustrent un exemple d'intégration du dispositif de ventilation 1 dans une face avant 20 de véhicule automobile.

Comme visible sur ces figures, une calandre 21 est munie de deux orifices 22, formant ouverture d'entrée de l'air F'.

Le dispositif de ventilation 1 est positionné derrière les orifices 22.

Sur ces figures, le dispositif de ventilation 1 est conforme au dispositif de ventilation 1 déjà décrit en relation avec les figures 1 à 4.

### Variante de réalisation de l'invention

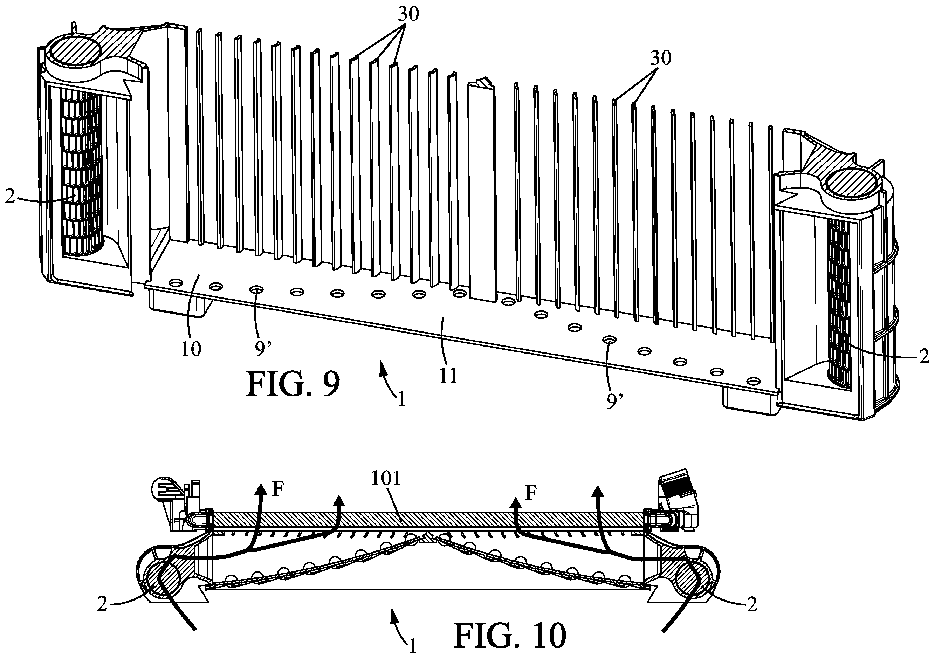

Selon la variante des figures 9 et 10, le dispositif de ventilation 1 comprend un moyen de guidage 3 tel qu'illustré sur les figures 1 à 4 (non représenté sur les figures 9 et 10 pour des raisons de clarté, ces dernières étant une vue partielle du module de la figure 1), un cadre 10, des turbomachines tangentielles 2 dans une configuration semblable à celle du premier mode de réalisation.

Le dispositif de ventilation 1 comprend en sus au moins un déflecteur entre le moyen de guidage 3 (non représenté) et l'échangeur de chaleur 101.

Le ou les déflecteurs assurent une meilleure répartition de l'air sur l'échangeur de chaleur 101, permettant une distribution plus homogène du flux d'air F dans l'échangeur de chaleur 101.

Sur les figures 9 et 10, le dispositif de ventilation 1 comprend une pluralité de déflecteurs 30.

Chaque déflecteur 30 est une tige dont une section transversale est courbée de sorte à guider l'air.

Les déflecteurs 30 sont alignés le long des barres de support 11, de préférence à équidistance les uns des autres, comme plus particulièrement visible sur la figure 10.

En position d'ouverture, l'air F soufflé par les turbomachines 2 est guidé vers l'échangeur 101 par le moyen de guidage 3 puis par les déflecteurs 30.

On note que le dispositif 1 selon cette variante de réalisation permet de mieux homogénéiser l'air à destination des échangeurs de chaleur 101 par l'intermédiaire des déflecteurs.

On note également que sur la figure 9 on a représenté une pluralité d'orifices 31, chaque orifice 31 étant destiné à recevoir un doigt 9' des éléments de guidage 5.

### Deuxième mode de réalisation

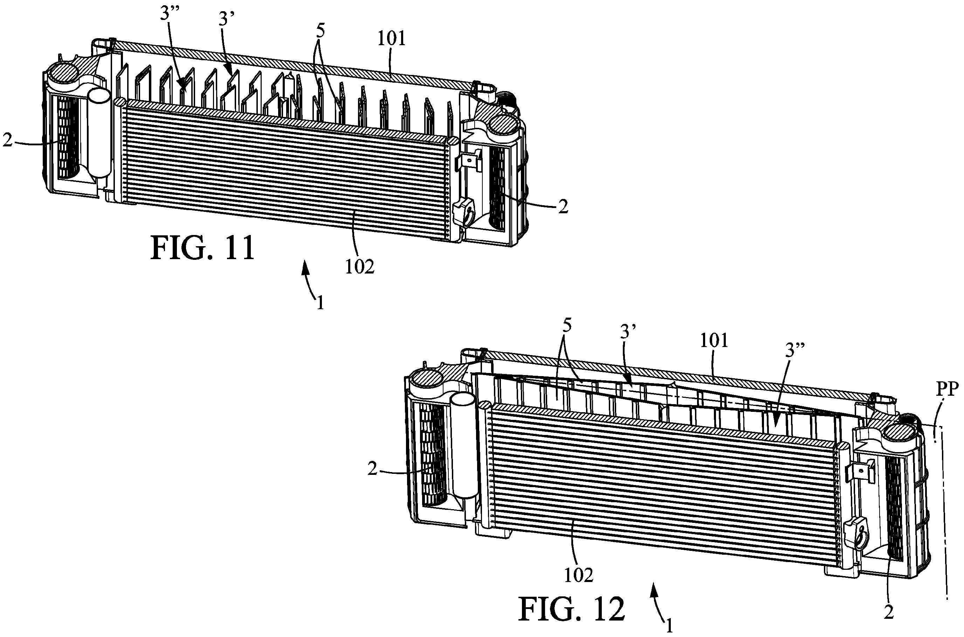

Selon le deuxième mode de réalisation illustré aux figures 11 et 12, le dispositif de ventilation 1 comprend deux moyens de guidage 3', 3".

Le premier moyen de guidage 3' permet de diriger l'air sur un premier échangeur de chaleur 101, tandis que le deuxième moyen de guidage 3" permet de diriger l'air vers un deuxième échangeur de chaleur 102.

Comme il ressort des figures 11 et 12, le dispositif de ventilation 1 est disposé entre les deux échangeurs 101, 102 s'étendant parallèlement.

Chacun des moyens de guidage 3', 3" comprend des éléments de guidage identiques à ceux décrits en relation avec le premier mode de réalisation.

Comme il ressort des figures 11 et 12, les axes de pivotement 7 des deux moyens de guidage 3 s'étendent parallèlement à la direction médiane de pivotement M.

L'ensemble des deux moyens de guidage 3', 3" présente une symétrie par rapport à un plan PP.

Le plan PP comprend une direction parallèle à la direction médiane M.

Le dispositif 1 est par ailleurs identique à celui décrit en relation avec le premier mode de réalisation.

Comme visible sur les figures 11 et 12, les deux moyens de guidage 3', 3" sont alimentés par les mêmes turbomachines 2.

On note que le dispositif 1 selon ce deuxième mode de réalisation peut aussi comprendre avantageusement des déflecteurs 30 (non représentées sur les figures 11 et 12) entre chacun des moyens de guidage 3' et 3" et respectivement les premier et deuxième échangeurs 101, 102 pour mieux homogénéiser l'air à destination des échangeurs de chaleur 101 et 102.

### Troisième mode de réalisation

Selon un troisième mode de réalisation, le dispositif de ventilation 1 comprend un seul moyen de guidage 3 comprenant un unique élément de guidage 5.

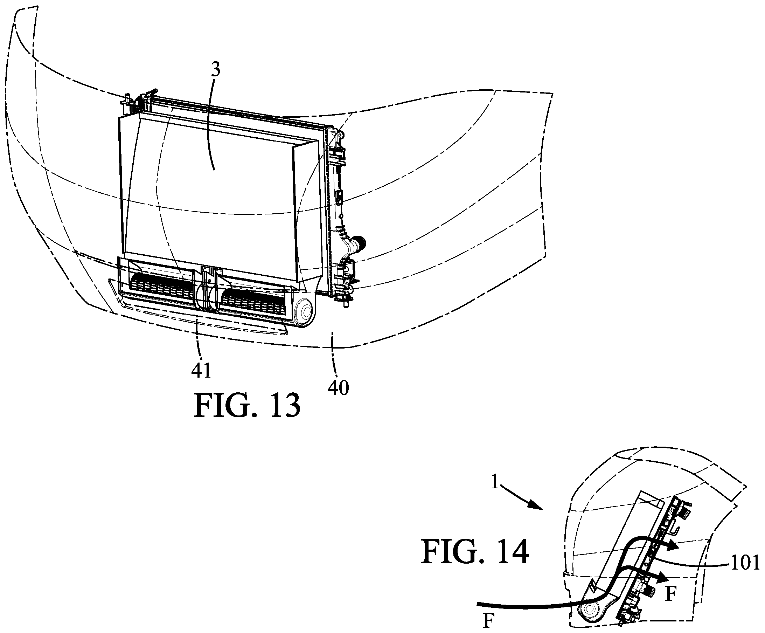

Comme visible sur les figures 13 et 14, l'élément de guidage 5 se présente sous la forme d'un capot.

Le dispositif de ventilation illustré 1 comprend également au moins une turbomachine tangentielle, voire deux turbomachines tangentielles comme représenté sur la figure 13, s'étendant dans le prolongement l'une de l'autre.

Ce mode de réalisation est particulièrement avantageux pour un véhicule électrique.

Dans ce cas, comme il ressort de la figure 13, une calandre 40 est percée d'un orifice 41 formant ouverture d'air.

Les deux turbomachines 2 sont disposées juste derrière l'orifice 41 de sorte que l'orifice 41 forme l'unique entrée d'air du dispositif de ventilation 1.

Avantageusement, les deux turbomachines 2 occupent tout le volume de l'entrée d'air de la calandre.

On note que le dispositif 1 selon ce troisième mode de réalisation peut également comprendre avantageusement des déflecteurs 30 (non représentés sur les figures 13 et 14) pour mieux homogénéiser l'air à destination de l'échangeur de chaleur 101.

Selon une variante non illustrée, l'au moins une turbomachine tangentielle 2 est positionnée à distance de l'entrée d'air 41.

Dans ce cas, une pièce supplémentaire permet d'emmener l'air depuis l'orifice 41 jusqu'au(x) turbomachine(s) 2.

On peut avantageusement munir l'une au moins des entrées d'air 41 d'au moins un volet mobile entre une position d'ouverture de l'entrée et une position de fermeture au moins partielle de l'entrée.

### Module d'échange

L'invention a également pour objet un module d'échange de chaleur 100 pour véhicule automobile comprenant le dispositif de ventilation 1 et au moins un échangeur de chaleur 101, le dispositif de ventilation et l'échangeur de chaleur étant positionnés l'un relativement à l'autre de sorte qu'un flux d'air mis en mouvement par le dispositif de ventilation alimente en air l'échangeur de chaleur, comme il ressort déjà de la description qui précède.

Selon une variante de réalisation du module, le dispositif de ventilation 1 est positionné de sorte qu'un flux d'air F mis en mouvement par le dispositif de ventilation alimente le premier échangeur de chaleur 101 et le deuxième échangeur de chaleur 102.

Le dispositif de ventilation 1 peut notamment être positionné entre le premier échangeur de chaleur 101 et le deuxième échangeur de chaleur 102 de sorte à alimenter chacun des échangeurs 101, 102 en air frais.

L'invention n'est pas limitée aux exemples de réalisation présentés et d'autres modes de réalisation apparaîtront clairement à l'homme du métier. Notamment, les différents exemples peuvent être combinés, tant qu'ils ne sont pas contradictoires.

Par ailleurs, les modes de réalisation représentés sur les figures illustrent des éléments de guidages d'air verticaux avec une turbomachine tangentielle montée latéralement. Toutefois, d'autres configurations de dispositif de ventilation peuvent être envisagées, telles qu'une réalisation selon laquelle les éléments de guidage d'air sont horizontaux, la ou les turbomachines étant alors positionnées en-dessous et/ou au-dessus des éléments de guidages.

En outre, le dispositif de ventilation peut être intégré aussi bien dans véhicule électrique qu'un véhicule thermique ou hybride. De cette manière on comprendra que les échangeurs refroidis par le dispositif de ventilation décrit précédemment peuvent être tout type d'échangeur de chaleur de véhicule automobile, tels qu'un échangeur de chaleur haute température et/ou basse température, un condenseur, un échangeur pour le refroidissement d'air de suralimentation, etc. Le module d'échange de chaleur peut de la même manière comporter n'importe quel échangeur de chaleur de ce type.

## Revendications

1. Module d'échange thermique comprenant au moins un premier échangeur de chaleur (101) et un dispositif de ventilation (1) destiné à générer un flux d'air en direction de l'échangeur de chaleur (101) de véhicule automobile, le premier échangeur de chaleur (101) et le dispositif de ventilation (1) étant positionnés l'un relativement à l'autre de sorte qu'un flux d'air (F) mis en mouvement par le dispositif de ventilation (1) alimente l'échangeur de chaleur (101), le dispositif de ventilation (1) comprenant au moins un premier et un deuxième ventilateur tangentiel (2) de mise en mouvement d'un flux d'air (F) à destination de l'échangeur de chaleur (101) et un moyen de guidage (3) comprenant une pluralité d'élément (5) de guidage de l'air conformés pour guider l'air mis en mouvement par les ventilateurs tangentiels (2) vers l'échangeur de chaleur (101), les éléments de guidage d'air (5) étant conformés pour délimiter au moins un passage d'air (E) vers l'échangeur de chaleur (101) et étant montés mobiles entre une position d'ouverture dudit au moins un passage d'air (E) et une position d'obturation (E) au moins partielle dudit au moins un passage d'air, chaque élément de guidage d'air (5) comprenant une surface de guidage d'air (6) et un axe de pivotement (7) de l'élément de guidage (5), les axes de pivotement (7) s'étendant parallèlement les uns aux autres, des projections (8', 9') de chaque axe de pivotement (7) dans un plan (O) orthogonal aux axes de pivotement (7) étant appelées projection (8', 9'), **caractérisé en ce que** l'au moins un premier et un deuxième ventilateur tangentiel (2) sont disposés latéralement de part et d'autre des éléments de guidage (5), les ventilateurs tangentiels (2) s'étendant parallèlement aux éléments de guidage (5), et **en ce qu'**une section totale des éléments de guidage (5) présente une direction médiane (M) parallèle aux éléments de guidage (5) de sorte à délimiter une première moitié de section (3-1) entre le premier ventilateur (2) et la direction médiane (M) et une deuxième moitié de section (3-2) entre le deuxième ventilateur (2) et la direction médiane (M), les éléments de guidage (5) étant conformés pour qu'une distance (D1) entre l'échangeur de chaleur (101) et chaque projection (8', 9'), soit inférieure à une distance (D2) entre l'échangeur de chaleur (101) et la projection (8") adjacente située dans la même moitié de section (3-1, 3-2) et étant plus proche du ventilateur associé (2).

2. Module d'échange thermique selon la revendication 1, le dispositif de ventilation (1) comprenant au moins un déflecteur d'air (30) configuré pour être disposé entre les éléments de guidage d'air (5) et l'échangeur de chaleur (101).

3. Module d'échange thermique selon la revendication précédente, le dispositif de ventilation (1) comprenant une pluralité de déflecteurs d'air (30) alignés et de préférence équidistants les uns des autres.

4. Module d'échange thermique selon l'une des revendications précédentes le dispositif de ventilation (1) comprenant une pièce pour amener un flux d'air extérieur (F') jusqu'au ventilateur tangentiel (2).

5. Module d'échange thermique selon l'une des revendications précédentes, le dispositif de ventilation (1) comprenant un deuxième moyen de guidage (3") comportant au moins un élément de guidage d'air (5) vers un deuxième échangeur de chaleur (102) du véhicule automobile.

6. Module d'échange thermique selon la revendication précédente, dans lequel les deux moyens de guidage (3', 3") sont alimentés par le même ventilateur tangentiel (2).

7. Module d'échange thermique selon l'une des revendications 5 ou 6, dans lequel chacun des moyens de guidage (3', 3") comprend une pluralité d'éléments de guidage d'air (5), chaque élément de guidage (5) comprenant une surface de guidage d'air (6) et un axe de pivotement (7) de l'élément de guidage (5), les axes de pivotement (7) s'étendant parallèlement les uns aux autres, l'ensemble des deux moyens de guidage (3', 3") présentant une symétrie planaire.

8. Module selon l'une des revendications précédentes, comprenant en outre un deuxième échangeur de chaleur (102), monté en vis-à-vis du premier échangeur de chaleur (101), le dispositif de ventilation (1) étant positionné de sorte qu'un flux d'air (F) mis en mouvement par le dispositif de ventilation (1) alimente le premier échangeur de chaleur (101) et le deuxième échangeur de chaleur (102).

9. Module selon la revendication précédente, dans lequel le dispositif de ventilation (1) est positionné entre le premier échangeur de chaleur (101) et le deuxième échangeur de chaleur (102).

10. Calandre pour un véhicule automobile, munie d'un module d'échange thermique selon les revendications 1 à 9.

## Patentansprüche

1. Wärmeaustauschmodul, beinhaltend mindestens einen ersten Wärmetauscher (101) und eine Ventilationsvorrichtung (1), die dazu bestimmt ist, einen Luftstrom in Richtung des Wärmetauschers (101) eines Kraftfahrzeugs zu erzeugen, wobei der erste Wärmetauscher (101) und die Ventilationsvorrichtung (1) so relativ zueinander positioniert sind, dass ein Luftstrom (F), der durch die Ventilationsvorrichtung (1) in Bewegung gebracht wird, den Wärmetauscher (101) beaufschlagt, wobei die Ventilationsvorrichtung (1) mindestens einen ersten und einen zweiten Querstromventilator (2) zum In-Bewegung-Bringen eines Luftstroms (F) für den Wärmetauscher (101) und ein Führungsmittel (3), das eine Vielzahl von Luftführungselementen (5) beinhaltet, die dazu eingerichtet sind, die durch die Querstromventilatoren (2) in Bewegung gebrachte Luft zu dem Wärmetauscher (101) zu führen, beinhaltet, wobei die Luftführungselemente (5) dazu eingerichtet sind, mindestens einen Luftkanal (E) zu dem Wärmetauscher (101) zu begrenzen, und zwischen einer Öffnungsstellung des mindestens einen Luftkanals (E) und einer mindestens teilweisen Verschlussstellung (E) des mindestens einen Luftkanals beweglich montiert sind, wobei jedes Luftführungselement (5) eine Luftführungsoberfläche (6) und eine Schwenkachse (7) des Führungselements (5) beinhaltet, wobei sich die Schwenkachsen (7) parallel zueinander erstrecken, wobei Projektionen (8', 9') jeder Schwenkachse (7) in einer Ebene (O) orthogonal zu den Schwenkachsen (7) als Projektion (8', 9') bezeichnet werden, **dadurch gekennzeichnet, dass** der mindestens eine erste und zweite Querstromventilator (2) seitlich zu beiden Seiten der Führungselemente (5) angeordnet sind, wobei sich die Querstromventilatoren (2) parallel zu den Führungselementen (5) erstrecken, und dass ein Gesamtquerschnitt der Führungselemente (5) eine Mittenrichtung (M) parallel zu den Führungselementen (5) aufweist, um so eine erste Querschnittshälfte (3-1) zwischen dem ersten Ventilator (2) und der Mittenrichtung (M) und eine zweite Querschnittshälfte (3-2) zwischen dem zweiten Ventilator (2) und der Mittenrichtung (M) zu begrenzen, wobei die Führungselemente (5) dazu eingerichtet sind, dass ein Abstand (D1) zwischen dem Wärmetauscher (101) und jeder Projektion (8', 9') kleiner ist als ein Abstand (D2) zwischen dem Wärmetauscher (101) und der angrenzenden Projektion (8"), die sich in der gleichen Querschnittshälfte (3-1, 3-2) befindet und dem assoziierten Ventilator (2) näher ist.

2. Wärmeaustauschmodul nach Anspruch 1, wobei die Ventilationsvorrichtung (1) mindestens ein Luftleitelement (30) beinhaltet, das dazu konfiguriert ist, zwischen den Luftführungselementen (5) und dem Wärmetauscher (101) angeordnet zu sein.

3. Wärmeaustauschmodul nach dem vorhergehenden Anspruch, wobei die Ventilationsvorrichtung (1) eine Vielzahl von Luftleitelementen (30) beinhaltet, die zueinander ausgerichtet und vorzugsweise gleich weit voneinander entfernt sind.

4. Wärmeaustauschmodul nach einem der vorhergehenden Ansprüche, wobei die Ventilationsvorrichtung (1) ein Teil zum Lenken eines Außenluftstroms (F') bis zu dem Querstromventilator (2) beinhaltet.

5. Wärmeaustauschmodul nach einem der vorhergehenden Ansprüche, wobei die Ventilationsvorrichtung (1) ein zweites Führungsmittel (3") beinhaltet, das mindestens ein Luftführungselement (5) hin zu einem zweiten Wärmetauscher (102) des Kraftfahrzeugs umfasst.

6. Wärmeaustauschmodul nach dem vorhergehenden Anspruch, wobei die zwei Führungsmittel (3', 3") durch denselben Querstromventilator (2) beaufschlagt werden.

7. Wärmeaustauschmodul nach einem der Ansprüche 5 oder 6, wobei jedes der Führungsmittel (3', 3") eine Vielzahl von Luftführungselementen (5) beinhaltet, wobei jedes Führungselement (5) eine Luftführungsoberfläche (6) und eine Schwenkachse (7) des Führungselements (5) beinhaltet, wobei sich die Schwenkachsen (7) parallel zueinander erstrecken, wobei die Gesamtheit der zwei Führungsmittel (3', 3") eine planare Symmetrie aufweist.

8. Modul nach einem der vorhergehenden Ansprüche, ferner beinhaltend einen zweiten Wärmetauscher (102), der gegenüber dem ersten Wärmetauscher (101) montiert ist, wobei die Ventilationsvorrichtung (1) so positioniert ist, dass ein durch die Ventilationsvorrichtung (1) in Bewegung gebrachter Luftstrom (F) den ersten Wärmetauscher (101) und den zweiten Wärmetauscher (102) beaufschlagt.

9. Modul nach dem vorhergehenden Anspruch, wobei die Ventilationsvorrichtung (1) zwischen dem ersten Wärmetauscher (101) und dem zweiten Wärmetauscher (102) positioniert ist.

10. Kühlergrill für ein Kraftfahrzeug, der über ein Wärmeaustauschmodul nach den Ansprüchen 1 bis 9 verfügt.

## Claims

1. Heat exchange module comprising at least a first heat exchanger (101) and a ventilation device (1) intended to generate an air flow towards the motor-vehicle heat exchanger (101), the first heat exchanger (101) and the ventilation device (1) being positioned in relation to one another in such a way that an air flow (F) set in motion by the ventilation device (1) is fed into the heat exchanger (101), the ventilation device (1) comprising at least one first and one second cross-flow fan (2) for moving an air flow (F) to the heat exchanger (101) and a guide means (3) comprising a plurality of air guiding elements (5) shaped to guide the air set in motion by the cross-flow fans (2) towards the heat exchanger (101), the air guiding elements (5) being shaped to delimit at least one air passage (E) towards the heat exchanger (101) and being mounted with the ability to move between a position in which said at least one air passage (E) is open and a position in which said at least one air passage is at least partially closed (E), each air guiding element (5) comprising an air guiding surface (6) and a swivel pin (7) of the guiding element (5), the swivel pins (7) extending parallel to one another, projections (8', 9') of each swivel pin (7) in a plane (0) orthogonal to the swivel pins (7) being referred to as projections (8', 9'), **characterized in that** the at least one first and one second cross-flow fan (2) are disposed laterally one on each side of the guiding elements (5), the cross-flow fans (2) extending parallel to the guiding elements (5), and **in that** a total cross section of the guiding elements (5) has a median direction (M) parallel to the guiding elements (5) so as to delimit a first half section (3-1) between the first fan (2) and the median direction (M) and a second half section (3-2) between the second fan (2) and the median direction (M), the guiding elements (5) being shaped so that a distance (D1) between the heat exchanger (101) and each projection (8', 9') is less than a distance (D2) between the heat exchanger (101) and the adjacent projection (8") situated in the same half section (3-1, 3-2) and closer to the related fan (2).

2. Heat exchange module according to Claim 1, the ventilation device (1) comprising at least one air deflector (30) designed to be disposed between the air guiding elements (5) and the heat exchanger (101).

3. Heat exchange module according to the preceding claim, the ventilation device (1) comprising a plurality of air deflectors (30) that are aligned and preferably equidistant from one another.

4. Heat exchange module according to one of the preceding claims, the ventilation device (1) comprising a part for bringing an external air flow (F') to the cross-flow fan (2).

5. Heat exchange module according to one of the preceding claims, the ventilation device (1) comprising a second guide means (3") comprising at least one air guiding element (5) for guiding air to a second heat exchanger (102) of the motor vehicle.

6. Heat exchange module according to the preceding claim, wherein the two guide means (3', 3") are fed by the same cross-flow fan (2).

7. Heat exchange module according to one of Claims 5 and 6, wherein each of the guide means (3', 3") comprises a plurality of air guiding elements (5), each guiding element (5) comprising an air guiding surface (6) and a swivel pin (7) of the guiding element (5), the swivel pins (7) extending parallel to one another, the set of the two guide means (3', 3") exhibiting planar symmetry.

8. Module according to one of the preceding claims, further comprising a second heat exchanger (102), mounted facing the first heat exchanger (101), the ventilation device (1) being positioned in such a way that an air flow (F) set in motion by the ventilation device (1) is fed into the first heat exchanger (101) and the second heat exchanger (102).

9. Module according to the preceding claim, wherein the ventilation device (1) is positioned between the first heat exchanger (101) and the second heat exchanger (102).

10. Grille for a motor vehicle provided with a heat exchange module according to Claims 1 to 9.
